Europäisches Patentamt

European Patent Office

Office européen des brevets

(19)

(11) EP 1 535 695 A2

(12) EUROPEAN PATENT APPLICATION

(43) Date of publication:
01.06.2005 Bulletin 2005/22

(51) Int Cl.7: B23K 26/12

(21) Application number: 04027866.5

(22) Date of filing: 24.11.2004

(84) Designated Contracting States:
AT BE BG CH CY CZ DE DK EE ES FI FR GB GR
HU IE IS IT LI LU MC NL PL PT RO SE SI SK TR
Designated Extension States:
AL HR LT LV MK YU

(30) Priority: 27.11.2003 JP 2003397498

(71) Applicant: FANUC LTD
Minamitsuru-gun, Yamanashi 401-0597 (JP)

(72) Inventors:
• Mori, Atsushi
  Minamitsuru-gun Yamanashi 401-0301 (JP)
• Okazaki, Ryoma
  Room 7-205, Fanuc Manshonharimomi
  Minamitsuru-gun Yamanashi 401-0511 (JP)

(74) Representative: Schmidt, Steffen J., Dipl.-Ing.
Wuesthoff & Wuesthoff,
Patent- und Rechtsanwälte,
Schweigerstrasse 2
81541 München (DE)

(54) Laser machining system

(57)     A laser machining system includes a laser oscillator (1) for outputting a laser beam, a light guide (2) through which the laser beam passes, a circulation guide (8) connected to the light guide (2), a filter (7) serving as a gas recycling means, and a fan (6) serving as a light guide blower means. The gas in the light guide (2) is sucked into the circulation guide (8) by the blower fan (6), so that molecules energized highly by being irradiated with the laser beam strike a filter material of the filter (7) provided in the circulation guide (8), thereby to restore the gas molecules to the ground state before irradiation and recycle it. The recycled gas is returned to the light guide (2). As gas molecules absorbing the energy of the laser beam and becoming large in effect of scattering of the laser beam is removed from the light guide (2), dispersion of the laser beam (3) can be suppressed and stable laser machining performance can be obtained.

Fig. 2

EP 1 535 695 A2

**Description**

BACKGROUND OF THE INVENTION

1. Field of the Invention

The present invention relates to a laser machining system reflecting and propagating a laser beam by a mirror to guide it to a machining point for cutting, welding, or other laser machining. In particular, the present invention relates to a laser machining system using a high output or high density laser beam.

2. Description of the Related Art

In a laser machining system, a laser beam is propagated and led to a machining point, using a mirror for laser machining. In such a laser machining system, to protect the mirror and other optical parts from contamination due to entry of dust from the outside, the general practice is to partition off the part through which the laser beam passes from the outside to form a light guide.

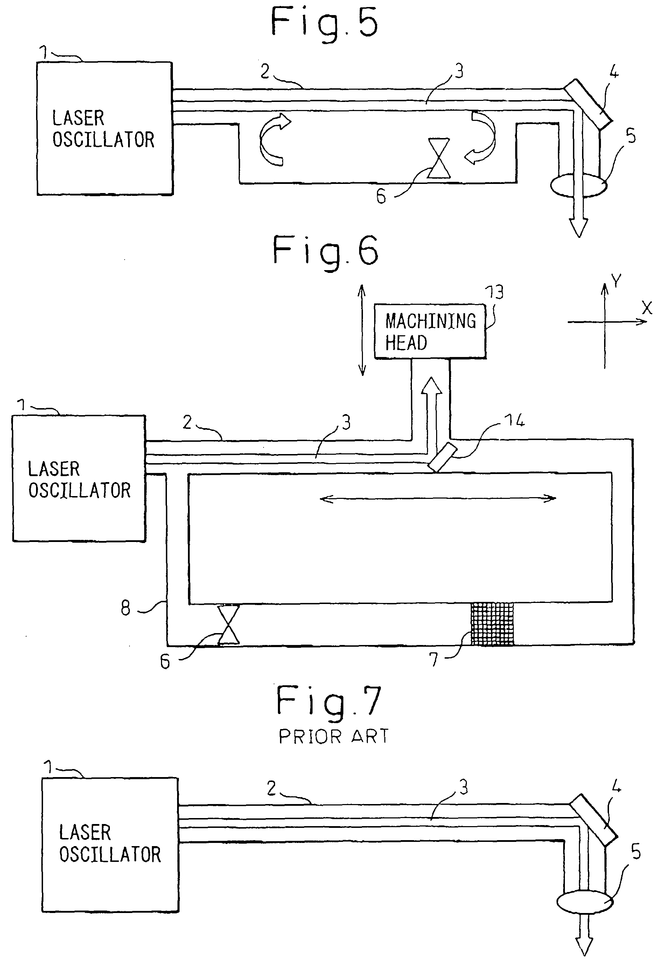

The smaller this light guide in cross-sectional area, the lower the cost of material as well and the greater the design freedom of the laser machining system, so this is advantageous economically. However, if the cross-sectional area of the light guide is too small, part of the laser beam is lost or part of the laser beam is reflected at the wall surface of the light guide and has a detrimental effect. To avoid this problem, in the prior art, as shown in FIG. 7, it had been considered that the smallest inside diameter of the light guide 2 should be three times the effective diameter of the laser beam 3, that is, the cross-sectional area of the light guide should be nine times the cross-sectional area of the beam. Note that the effective diameter of a laser beam 3 is defined in various publications as well. Apparatuses for measuring this are also on the market. Therefore, details of the effective diameter of a laser beam 3 will be omitted.

In FIG. 7, reference numeral 1 indicates a laser oscillator. The laser beam 3 output from the laser oscillator 1 passes through the light guide 2, is reflected at a reflection mirror 4, is guided to a condensing lens 5, and is focused on a workpiece. The cross-sectional area of the light guide 2 is made equal to about "$\pi$ x (effective beam radius)$^2$ x 9".

However, the laser beam 3 is absorbed and scattered by the gas molecules in the air. With a high output or high density laser beam 3, this effect can no longer be ignored. If propagating such a laser beam 3 over a certain distance, for scattering in particular, the scattering angle, the energy distribution, the orientation, and other parameters of the laser beam 3 end up changing from those of the laser beam immediately after leaving the laser oscillator 1. As gas molecules acting to absorb or scatter a laser beam 3 for a wavelength of a $CO_2$ laser (10.6 $\mu$m), frequently used for a laser machining system, there are water molecules and carbon dioxide molecules originally contained in the air and also hydrocarbons and other organic compounds with a high concentration in factories etc. where the laser machining system is installed. For lasers of other wavelengths, gas molecules including nitrogen, sulfur, chlorine, and fluorine also are effective.

The effect of absorption and scattering caused by the gas molecules in this way will be described below giving specific examples. As a laser machining system, an example of one with a machining region of 1.5 m x 3 m and an output of the carried laser oscillator of 6 kW is shown. In such a machining system, while depending on the design specifications, the distance from the laser oscillator 1 to the condensing lens 5 condensing the laser beam 3 is often in the range of 5 m to 15 m. In the case of a laser machining system designed without considering the absorption and scattering of the gas molecules, the laser beam 3 input to the condensing lens 5 sometimes has a diameter of two to three times the case of elimination of the effect of the absorption and scattering. In practice, if trying to cut a workpiece by a laser beam 3 dispersed in this way, burning (abnormal combustion reaction of material and assist gas) or gouging (state where laser beam does not pass through bottom) occurs and becomes a cause of poor machining.

If the effect of scattering of the laser beam 3 due to gas molecules is to simply change the dispersion angle, the effect should be able to be eliminated by using a corrective optical system for correcting the dispersion angle. However, no example of maintaining the machining performance by successively using such a corrective optical system has been reported. It has been believed that this cannot be realized by a simple optical system. This fact shows that scattering of the laser beam 3 due to gas molecules is accompanied with qualitative changes in the laser beam 3 not only the dispersion angle.

Therefore, as the method of eliminating dispersion and change of the laser beam due to absorption and scattering, it is sufficient to eliminate such gas molecules. The most complete means is to propagate the laser beam through a vacuum. Further, as an alternative, the general method is to fill the light guide for guiding the laser beam 3 with a gas for the wavelength of the used laser. For example, in the case of a $CO_2$ laser, it is effective to supply nitrogen gas to the light guide.

Japanese Unexamined Patent Publication (Kokai) No. 9-99387 proposes a method of eliminating gas molecules causing absorption and scattering from the air by a filter etc. and supplying the result to a laser beam light guide. According to this system, as described at the start, the cross-sectional area of the light guide need only be about nine times the cross-sectional area of the effective beam diameter of the laser.

Further, Japanese Patent No. 3159640 proposes to ease the effect due to absorption and scattering by providing an agitation device in the light guide so as to prevent the properties after dispersion of the laser beam from becoming asymmetric with respect to the optic axis.

This scattering action of the laser beam is believed to be largely due to Rayleigh scattering, but this Rayleigh scattering has the property of becoming larger in effect due to the state of the gas electron energy. Therefore, when gas molecules which have become high in electron energy state due to being irradiated by a laser beam once are again struck by a laser beam, this scattering effect becomes extremely large. When propagating the laser beam through the air, the gas molecules absorbing the laser beam quickly disperse, so the effect of dispersal of the laser beam becomes smaller. However, if firing the laser beam in a closed space such as a light guide of a laser machining system, the gas molecules absorbing the laser beam and changed in electron energy state are present in a high density in the light guide and the laser beam tends to disperse vigorously. Further, this trend becomes remarkable in a high output, high density laser.

However, a design making the conventional cross-sectional area about nine times the cross-sectional area of the effective beam diameter of the laser beam does not consider such scattering as described above and invites an extremely bad situation in a high output, high density laser beam.

Therefore, a need arose for providing a means for dealing with such absorption and scattering. In the above prior art, there were the following problems.

The means of holding the laser light guide at a vacuum has the technical problem that the light guide of the laser machining system has many moving parts and maintenance at a vacuum is difficult in addition to the problem of costs. On the other hand, even if the vacuum degree is low, the amount of the gas molecules causing absorption and scattering of the laser beam becomes small, so that the effect of preventing dispersion and change of the laser beam is great. However, by making the inside of the light guide a vacuum, entry of dust from outside the light guide becomes easier. Therefore, the problem remains of contamination of the mirror etc.

The means of filling the laser light guide with a gas not reacting with the laser beam such as nitrogen gas has the problem of a difficulty in maintaining the gas purity in the light guide in addition to the problem of cost. As described above, the light guide of a laser machining system has many moving parts and achievement of a completely hermetic structure is difficult. Gas molecules having an absorbing and scattering effect such as $CO_2$ or water molecules are extremely fast in dispersion rate. If a large amount of nitrogen gas is not pre-pressurized and continuously passed through the light guide, the molecules will end up entering the light guide easily. Therefore, this means still has problems technically.

Regarding the method of passing air stripped of gas molecules absorbing and scattering a laser beam instead of nitrogen gas etc., the only difference is that instead of using nitrogen gas separated from the air in advance, a gas separation device is added to the laser machining system. It is only possible to expect an effect in terms of cost. Further, at the present point of time, the efficiency of separation of filters able to be used in the same system is not complete, and no effect above the reduced cost can be expected.

That is, complete elimination of the gas molecules absorbing and scattering the laser beam from the laser beam light guide is accompanied with economic and technical problems. In this way, the technique of reducing the density of gas molecules has a large effect of reducing the dispersion of the laser beam. However, in so far as the gas molecules cannot be completely removed, the energy of the laser beam is absorbed and the electron energy state changes and gas molecules increased in scattering effect are present in the light guide. Leaving the gas molecules in this way results in greater scattering of the laser beam.

Further, the means of providing an agitation device in the light guide can prevent the laser beam from dispersing (scattering) asymmetrically with respect to the optic axis, but cannot prevent scattering itself. Even if agitating to keep the gas temperature distribution constant, the molecules absorbing the energy of the laser beam and increased in the electron energy state are stored in the light guide, so that the laser beam is greatly dispersed and the processing performance falls.

SUMMARY OF THE INVENTION

Therefore, an object of the present invention is to provide a laser machining system able to eliminate the above problems in the prior art and reduce the dispersion of the laser beam at a low cost.

The present invention provides a laser machining system in which a laser beam is passed through the inside of a light guide partitioned off from the outside air and is guided to a machining point on a workpiece for laser machining of the workpiece, which includes a gas recycling means for recycling gas highly energized by being irradiated with the laser beam, by restoring the highly energized gas to the energy state before being highly energized or bringing the highly energized gas close to the energy state before being highly energized, and a light guide blower means for sending to the gas recycling means the highly energized gas in a part of the light guide through which the laser beam passes and replacing the highly energized gas by a gas recycled by the gas recycling means. According to the laser machining system of the present invention, it is possible to remarkably reduce the scattering of the laser beam.

The gas recycling means may be selected from the group comprised of a filter, heat exchanger, and circulation guide having a volume of at least three times the part of the light guide through which the laser beam passes. Further, the gas recycling means may be a part of the light guide having a cross-sectional area uniform in the longitudinal direction and exceeding a length of 1 meter, the cross-sectional area being at least 100 times the effective area of the laser beam passing through that part.

In a preferable embodiment, the gas recycling means is a filter, the light guide blower means is a blower fan, a plurality of combinations of the filter and blower fan are arranged in the light guide, and the blower fan circulates the gas so that the gas in the light guide passes through the filter in a direction perpendicular to the optic axis of the laser beam.

Preferably, a replacement rate of gas in the part of the light guide through which the laser beam passes is in the range represented by the following inequality:

$$R \geq 400\ Cp \times Cc \times Co \times Ce$$

where R is the replacement rate (vol%/sec), $Cp$ is the gas pressure coefficient = (ambient air pressure)/(ordinary air pressure), $Cc$ is the $CO_2$ concentration coefficient = ($CO_2$ concentration in light guide)/($CO_2$ concentration in the air), $Co$ is the laser output coefficient = (laser output (kW))/1 kW, and $Ce$ is the laser energy density coefficient = $1\ mm^2$/(laser beam sectional area $(mm^2)$).

According to the present invention, gas molecules becoming large in effect of scattering by absorption of the energy of the laser beam are quickly removed from the light guide of the laser beam, recycled so as to become smaller in scattering effect, and then returned to the light guide, so that it is possible to suppress scattering of the laser beam and obtain a stable laser machining performance even without completely removing the gas molecules absorbing the energy of the laser beam.

## BRIEF DESCRIPTION OF THE DRAWINGS

These and other objects, features, and advantages of the present invention will be described in more detail below based on preferred embodiments of the present invention with reference to the accompanying drawings, wherein:

FIG. 1 is a schematic view of a first embodiment of the present invention;
FIG. 2 is a schematic view of a second embodiment of the present invention;
FIG. 3 is a schematic view of a third embodiment of the present invention;
FIGS. 4A and B are schematic views of a fourth embodiment of the present invention;
FIG. 5 is a schematic view of a fifth embodiment of the present invention;
FIG. 6 is a schematic view of a sixth embodiment of the present invention; and

FIG. 7 is a schematic view of a conventional laser machining system.

## DESCRIPTION OF THE PREFERRED EMBODIMENTS

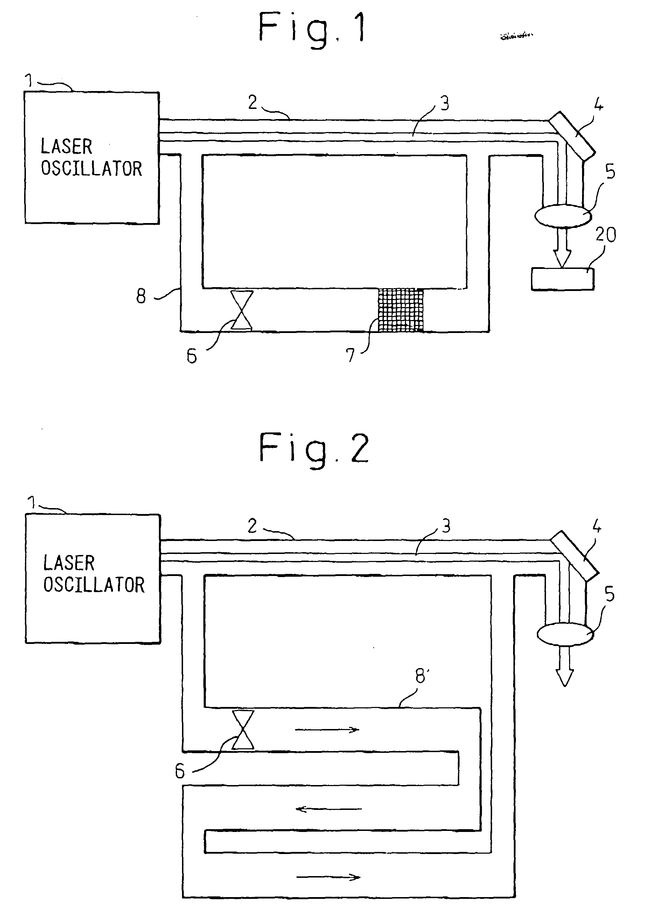

FIG. 1 is a schematic view of a first embodiment of the present invention. The laser beam 3 output from a laser oscillator 1 passes through a light guide 2, is reflected at a reflection mirror 4, is guided to a condensing lens 5, and is focused on a workpiece 20 for machining. On these points, the system is the same as the conventional laser machining system shown in FIG. 7. On the other hand, the laser machining system of this embodiment differs from the conventional laser machining system in that there is provided a light guide blower means for replacing the gas in the light guide 2 and a gas recycling means for restoring the gas molecules in the high electron energy state to the ground state. Note that components corresponding to the components in the related art are assigned the same reference numerals.

The light guide 2 has a circulation guide 8 for circulating the gas in the light guide 2 additionally connected to it. Inside the circulation guide 8, a blower fan 6 comprised of an axial flow fan and a filter 7 are arranged. In this embodiment, the circulation guide 8 and the blower fan 6 constitute the light guide blower means, while the filter 7 constitutes the gas recycling means.

The gas molecules in the light guide 2 which is irradiated by the laser beam 3 output from the laser oscillator 1 becomes higher in electron energy state. However, the gas in the light guide 2 is sucked into the circulation guide 8 by the blower fan, passes through the filter 7, and is then returned to the light guide 2. The gas molecules becoming higher in electron energy state are passed through the filter 7 and thereby are restored to the ground state before the absorption of the energy of the laser beam or brought close to the ground state. That is, the gas molecules becoming higher in electron energy state collide with the filter material of the filter 7, thereby to release the electron energy and to be restored to the ground state.

The function of the filter 7 in this embodiment is to make the gas molecules collide with the surface of the filter material of the filter 7 and release the electron energy. Therefore, it is required to increase the probability of collision with the surface of the filter material, and a material such as filter paper or steel wool can be used.

Thus, the gas molecules restored to the ground state are returned to the inside of the light guide 2. It is possible to suppress scattering of the laser beam 3, by making the volume replacement rate for replacing the gas in the part of the light guide 2 through which the laser beam 3 passes with gas blown in by the light guide blower means (circulation guide 8 and blower fan 6), that is, the volume replacement rate for replacing it with gas with an electron energy state restored to the ground state, a predetermined value or more.

The replacement rate of the gas has to be adjusted by the altitude at which the laser machining system is installed, that is, the gas density, and has to be made greater along with the rise in the output of the laser beam 3 and increased in a laser beam 3 with a high energy density. Further, it is also necessary to consider the recycling efficiency of the gas recycling means in determining the replacement rate.

Further, when filling the light guide 2 with nitrogen or other gas molecules not absorbing and scattering the laser beam 3, it is necessary to adjust the replacement rate in accordance with the air-tightness of the light guide 2. Further, in the case of a laser machining system for supplying air from which gas molecules absorbing and scattering the laser beam 3 have been removed, the rate of removal of the gas molecules is considered.

Therefore, the minimum required replacement rate of gas is determined theoretically or experimentally considering the above matters.

In the case of the first embodiment, since the direction along which the optical axis of the laser beam 3 extends and the blowing direction are parallel to each other, the flow rate of blowing has to be made fast. For example, in the case of a $CO_2$ laser beam with a laser output of 5 kW and a diameter of the laser beam 3 of 10 mm, when the cross-sectional area of the inside diameter of the light guide is 0.01 m$^2$ and the length of the light guide is 4 meters, an amount of blowing of 600 liters per minute was necessary. The replacement rate of the gas at this time corresponds to 25%/sec.

$$600 \text{ liters/min} = 0.01 \text{ m}^3/\text{sec} = 0.01 \text{ m}^2 \times 4 \text{ m} \times 25\%/\text{sec}$$

In a $CO_2$ laser, when the replacement gas is clean dry air ($CO_2$, $N_2$, Ar, O), the replacement rate R (vol%/sec) is designed to satisfy the following formula (1).

$$R \geq Rb \times Cp \times Cc \times Co \times Ce \qquad (1)$$

Here, Rb is the basic replacement rate at ordinary temperature and ordinary air pressure = 400 (vol%/sec), Cp is the air pressure coefficient = (ambient air pressure (atm))/1 atm, Cc is the $CO_2$ concentration coefficient = ($CO_2$ concentration in light guide)/($CO_2$ concentration in the air), Co is the laser output coefficient = (laser output (kW))/1 kW, and Ce is the laser energy density coefficient = 1 mm$^2$/(laser beam sectional area (mm$^2$)). Note that here the ordinary air pressure is made 1 atm.

In the above-mentioned first embodiment, a filter 7 is used as the gas recycling means, but it is also possible to use a heat exchanger 7 instead of the filter 7. The gas recycling means should be one able to restore the gas molecules becoming higher in the electron energy state to the ground state of before the laser beam absorption. Therefore, although the filter 7 or the heat exchanger is designed to increase the opportunities for the gas molecules to collide with the filter material or wall surfaces so as to release the larger electron energy and restore the molecules to the ground state, something designed to secure sufficient time for gas molecules in the high energy state to collide with other molecules in the relatively low energy state and release energy may be used as the gas recycling means.

FIG. 2 is a schematic view of a second embodiment of the present invention, in which the circulation guide 8 is lengthened and the circulation path itself is used as a gas recycling means, thereby to increase the opportunities for gas molecules in the high energy state to collide with other gas molecules in the low energy state.

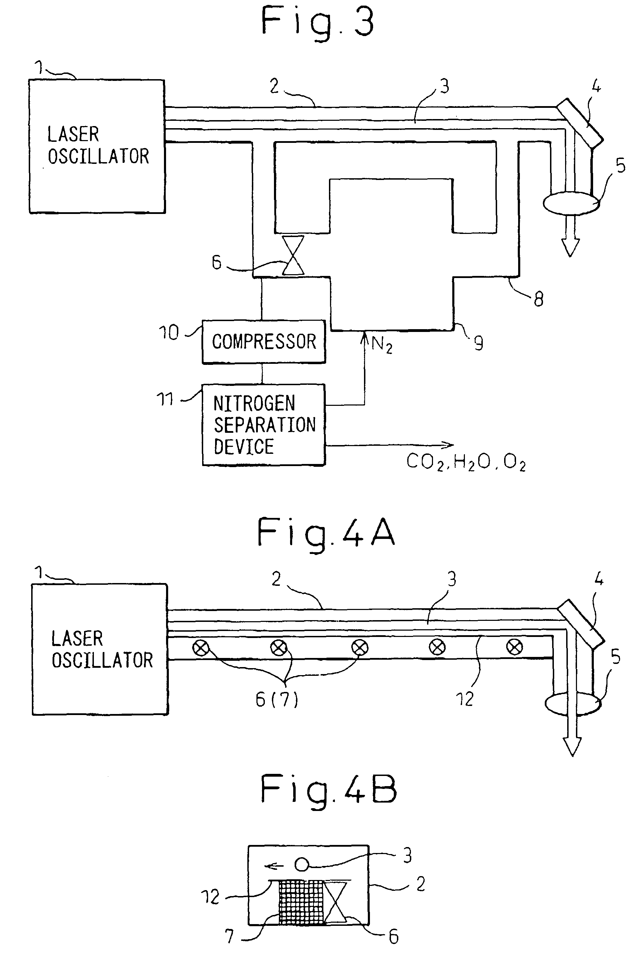

Further, FIG. 3 is a schematic view of a third embodiment of the present invention, in which a buffer 9 is provided, as a gas recycling means, in the circulation guide 8, thereby to increase the opportunities for gas molecules in the high energy state to collide with other gas molecules in the relatively low energy state.

The second and third embodiments shown in FIG. 2 and FIG. 3 differ from the first embodiment in that a circulation guide 8' with a long route or a circulation guide provided with a large space (buffer) 9 is used, instead of the filter 7 in the embodiment of FIG. 1, as a gas recycling means.

In the second and third embodiments, the gas in the light guide 2 is sucked into the circulation paths 8, 8' by a blower fan and is passed through the long space of the circulation path 8' or the buffer 9 of the large space. Due to this, the time until the gas returns to the inside of the light guide 2 becomes longer and the time where the gas remains in the circulation guide 8, 8' becomes longer, so that the gas molecules becoming higher in electron energy state upon irradiation by the laser beam 3 in the gas taken in increases opportunities for collision with other molecules of the relatively low energy state. As a result, the gas molecules in the high electron energy state are restored to the ground state of before laser beam absorption or are brought close to the ground state, and are then returned to the light guide 2.

The volume of the buffer 9 provided in the long route circulation guide 8' or circulation guide 8 has to be changed according to the time required for making the gas molecules in the high energy state the ground state of before absorption of the laser beam, that is, the time required for recycling the gas. This volume of the buffer 9 is experimentally found and determined in accordance with the density of the gas absorbing the energy of the laser beam and raised in the electron energy state, the diameter of the laser beam 3 after passing through the light guide 2, machining performance and other things.

According to experiments by the applicant, a volume of at least three times the part of the light guide through which the laser beam passes is effective.

In the third embodiment, the gas in the light guide 2 is passed through a compressor 10 and taken into the nitrogen separation device 11. The nitrogen is separated from carbon dioxide gas, water vapor, and oxygen, etc., and is returned to the circulation guide 8. The $N_2$ gas not reacting with the $CO_2$ laser beam is introduced into the inside of the light guide 2 to lower the density of the gas molecules causing absorption and scattering of the laser beam 3 and to further prevent the dispersion of the laser beam 3. Further, in the third embodiment, since the inlet of the nitrogen separation device 11 is provided in the light guide 2, it is possible to raise the $N_2$ gas concentration in the light guide 2.

FIG. 4A is a schematic view of a fourth embodiment of the present invention, while FIG. 4B is a cross-sectional view of the light guide. In the fourth embodiment, the light guide blower means and the gas recycling means are provided in the light guide 2. In more detail, a blower fan 6 is provided so as to blow gas in a direction perpendicularly intersecting the optic axis of the laser beam 3. The filter 7 is provided facing the blower fan 6 and close to it. A plurality of combinations of the blower fan and filter 7 are provided in the light guide 2. Above each of the combinations, a plate 12 is provided in parallel to the optic axis of the laser beam 3 so as to divide the inside of the light guide 2 into regions. The laser beam 3 passes through the region above this plate 12. Further, the two ends of the plate 12 in the direction perpendicular to the optic axis of the laser beam 3 do not reach the wall surfaces of the light guide 2, i.e., clearance is provided. Therefore, the gas in the light guide 2 flows so as to cut across the optic axis of the laser beam 3 (in the direction perpendicular to the optic axis) when the blower fan 6 is driven. That is, the gas flows in the light guide 2 so as to revolve around the center axis of the light guide 2. By passing through the filter 7 in the middle of the flow, the gas molecules in the high electron energy state collide with the filter material of the filter 7 and are restored to the ground state before absorption of the laser beam.

FIG. 5 is a schematic view of a fifth embodiment of the present invention. In the fifth embodiment, a light guide 2 is provided having a part of the length of at least one meter having a uniform cross-sectional area in the length direction. By forming the light guide 2 so that the cross-sectional area of the light guide 2 becomes at least 100 times the effective cross-sectional area of the laser beam 3 passing through this part, a space for recycling the gas in the light guide 2 is established. Further, a blower fan 6 by which gas is circulated in the light guide 2 is provided in the light guide 2. This blower fan 6 replaces the gas in the part where the laser beam 3 passes.

FIG. 6 is a schematic view of a sixth embodiment of the present invention. Laser machining systems include types in which a workpiece is moved relative to a machining head for the machining by fixing the machining head and moving the workpiece and types in which a machining head is moved to make a laser beam scan a workpiece for the machining. Application of the present invention to a laser machining system of the type making the laser beam scan the workpiece is shown in the sixth embodiment. In the laser machining system of FIG. 6, a reflection mirror 14 moves in the direction of the X-axis together with a machining head 13. Further, the machining head 13 also moves in the direction of the Y-axis which is perpendicular to the X-axis extending in the lateral direction and extends in the vertical direction. In such a type, the light guide 2 and the circulation guide 8 are connected to each other at the two ends of the light guide 2 in the X-axial direction. The stroke of movement in the direction of the Y-.axis is smaller than the stroke of movement in the direction of the X-axis, so that the length of the light guide in the direction of the Y-axis is of an extent which can be ignored. Therefore, if replacing the gas by the circulation guide 8 connected to the two ends of the light guide 2 in the direction of the X-axis, dispersion of the laser beam can be sufficiently prevented.

While the present invention has been described with reference to the embodiments shown in the accompanying drawings, these embodiments are only illustrative but not limitative. Accordingly, the scope of the present invention is limited only by the claims, and the preferred embodiments of the present invention may be modified or changed without departing from the scope of the claims.

**Claims**

1. A laser machining system, in which a laser beam (3) is passed through the inside of a light guide (2) partitioned off from the outside air and is guided to a machining point on a workpiece (20) for laser machining of the workpiece, **characterized in that** said laser machining system comprises:

   a gas recycling means (7; 8'; 9) for recycling gas highly energized by being irradiated with the laser beam (3), by restoring the highly energized gas to the energy state before being highly energized or bringing the highly energized gas close to the energy state before being highly energized; and
   a light guide blower means (6) for sending to said gas recycling means the highly energized gas in a part of said light guide (2) through which the laser beam passes and replacing the highly energized gas by a gas recycled by said gas recycling means.

2. The laser machining system according to claim 1, wherein said gas recycling means is selected from the group comprised of a filter (7), heat exchanger, and circulation guide (8; 8') having a volume of at least three times the part of said light guide (2) through which the laser beam (3) passes.

3. The laser machining system according to claim 1, wherein said gas recycling means comprises a part of said light guide (2) having a cross-sectional area uniform in the longitudinal direction and exceeding a length of 1 meter, the cross-sectional area being at least 100 times the effective area of the laser beam (3) passing through that part.

4. The laser machining system according to claim 1, wherein said gas recycling means is a filter (7), said light guide blower means comprises a blower fan (6), a plurality of combinations of said filter and blower fan are arranged in said light guide (2), and said blower fan circulates said gas so that the gas in said light guide passes through said filter in a direction perpendicular to the optic axis of said laser beam (3).

5. The laser machining system according to claim 1 or 2, wherein a replacement rate of gas in the part of said light guide (2) through which the laser beam (3) passes is in the range represented by the following inequality:

$$R \geq 400 \, Cp \times Cc \times Co \times Ce$$

where R is the replacement rate (vol%/sec), Cp is the gas pressure coefficient = (ambient air pressure)/(ordinary air pressure), Cc is the $CO_2$ concentration coefficient = ($CO_2$ concentration in light guide)/($CO_2$ concentration in the air), Co is the laser output coefficient = (laser output (kW))/1 kW, and Ce is the laser energy density coefficient = 1 $mm^2$/(laser beam sectional area ($mm^2$)).

# Fig. 1

# Fig. 2

# Fig. 3

# Fig. 4A

# Fig. 4B

# Fig.5

LASER OSCILLATOR

# Fig.6

MACHINING HEAD

LASER OSCILLATOR

# Fig.7
## PRIOR ART

LASER OSCILLATOR